Europäisches Patentamt

European Patent Office

Office européen des brevets

(11) Publication number: **0 282 170 B1**

# EUROPEAN PATENT SPECIFICATION

(45) Date of publication of patent specification: **12.08.92**  (51) Int. Cl.⁵: **A23K 1/18**, A23K 1/00

(21) Application number: **88301188.4**

(22) Date of filing: **12.02.88**

(54) Shrimp feed.

(30) Priority: **10.03.87 US 24171**

(43) Date of publication of application:
**14.09.88 Bulletin 88/37**

(45) Publication of the grant of the patent:
**12.08.92 Bulletin 92/33**

(84) Designated Contracting States:
**ES FR GB IT**

(56) References cited:
**EP-A- 0 208 528**
**GB-A- 1 604 382**
**US-A- 3 892 866**

**APPLIED BIOCHEMISTRY AND BIOTECHNOL-OGY, vol. 10, 1984, pages 275-288, The Humana Press Inc.; D.A. JONES et al.: "Current status of micoencapsulated diets for aquaculture"**

**NATURE, vol. 247, no. 5438, 25th January 1974, pages 233-235, London, GB; D.A. JONES et al.: "Microcapsules as artificial food particles for aquatic filter feeders"**

(73) Proprietor: **E.I. DU PONT DE NEMOURS AND COMPANY**
**1007 Market Street**
**Wilmington Delaware 19898(US)**

(72) Inventor: **Smith, Malcolm Seaborn**
**5990 Windswept Street**
**Beaumont Texas 77706(US)**
Inventor: **Daigle, Colastie Joseph**
**Route 12 Box 972**
**Orange Texas 77630(US)**

(74) Representative: **Jones, Alan John et al**
**CARPMAELS & RANSFORD 43 Bloomsbury Square**
**London, WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

## BACKGROUND OF THE INVENTION

This invention relates to a method of feeding shrimp and to the feed composition.

## DESCRIPTION OF THE PRIOR ART

Shrimp are raised commercially in captivity and fed with nutrients derived from a wide variety of products such as fish and fish by-products, crustacea meals, animal slaughterhouse products, grains and plant derived products including oils, and milk and milk by-products. Commercial feeds do not retain their integrity in water for a satisfactory period of time, but dissolve and disintegrate before the shrimp can consume the feed. They are held together by a water soluble natural based binder. Feeds of this type dissolve rapidly as pellets thereof are cast into the water. Feeds are expensive and represent a significant expense in the raising of shrimp, and the disintegrated pellet represents feed that is not consumed by the shrimp. Any vitamins and minerals present in the feed also end up in the water without consumption by the shrimp. In captive bodies of water in which the shrimp are contained, this unconsumed feed "clouds" the water, making it less hospitable for the shrimp, such as by feeding other organisms in the water and causing the water to lose needed oxygen content.

Various fish and crustacea baits are available for attracting these creatures into traps, but these have not been used for shrimp because shrimp are caught by nets instead of traps. Baits have not been demonstrated as being suitable for feeding shrimp over much of their life cycle.

EP-A-0 208 528 discloses fish and crustacean bait consisting essentially of water insoluble polymer and an attractant.

A need exists for a shrimp feed capable of being consumed by the shrimp and of retaining its integrity in water for a sufficient period of time, on the order of several hours, to allow the shrimp to find and consume the feed.

## SUMMARY OF THE INVENTION

One aspect of the present invention comprises a method for feeding shrimp, comprising adding to the water habitat of the shrimp, pellets having a size suitable for gripping by the shrimp, said pellets having the composition of (a) from 75 to 95 weight percent of nutrient, (b) from 0.5 to 10 weight percent of water insoluble polymer having a melting point below 110°C., and (c) optionally an effective amount of lubricant, vitamin, mineral, and preservative.

Another aspect of the present invention is the shrimp feed composition itself.

## DETAILED DESCRIPTION OF THE INVENTION

The nutrient can be prepared from finely divided animal or plant products. Such nutrients include fish meal, powdered fish, crab or other crustacea meal, meat scrap, milk solids, blood meal, grain flour (wheat flour, corn flour, etc.), soybean meal, algae meal, dried yeast, and numerous animal and plant by-products which are well-known to the person skilled in the art. The preferred nutrient is grain flour.

The amount of nutrient medium in the feed of the present invention should be from 75 to 95 weight percent, and preferably from 85 to 93 weight percent. Less than 75 weight percent of nutrient tends to make the composition less effective as a feed for the shrimp.

The polymer component acts as a water resistant binder for the feed composition to give the feed physical integrity for handling and when added to water.

Suitable polymers have the common characteristics of being relatively soft, low melting, water insoluble, and able to accept high filler loadings, such as the very high proportion of nutrient present in the composition, while retaining satisfactory physical strength properties. The polymers must further be soft enough and effective at low concentrations to permit the shrimp to consume the feed, yet strong enough to remain substantially intact over the hours of long feeding periods of the shrimp. The feed is best made by a process which melts the polymer component of the feed composition at a low enough temperature (about 90 - 110°C) such that the other components of the feed composition will not be degraded during the processing. Extruders and pellet mills are examples of apparatus that can be used to accomplish this result. Either process compacts the composition into pellet form while heating the polymer, which is uniformly distributed throughout the composition, to bind the composition together. Microscopic examination of cross sections of the pellet reveals coating of the nutrient particles by the polymer.

Thus suitable polymers include water insoluble polymers having a melting point below 110°C selected from the group consisting of polyamides and copolymers of ethylene with at least one ethylenically unsaturated comonomer. Examples of such polymers are ethylene/n-butyl acrylate/carbon monoxide (E/nBA/CO), ethylene/methacrylic acid (E/MAA), E/BA/MAA, E/BA/GMA (glycidyl methacrylate), E/MM/VA (vinyl acetate), E/VA/CO, and E/iBA (isobutylacrylate)/MAA, and polyamides, such as "Macromelt" 6301 hot melt adhesive available from Hendel Corporation.

The polymers are digested by the shrimp but no parts per million trace of the polymer is found in the edible portion of the shrimp when harvested.

Generally the ethylenically unsaturated comonomer in the ethylene copolymer is present in an amount of from 15 to 45 weight percent. Decreasing the amount of ethylenically unsaturated comonomers in a given ethylene copolymer increases its melting point, decreases its binding ability, and increases the hardness of the composition. A compromise of these properties is necessary in the various polymers to produce acceptable feed.

Preferably the ethylenically unsaturated comonomer is present in an amount of from 20 to 40 weight percent, and most preferably from 25 to 35 weight percent.

The most preferred ethylene copolymer is ethylene/vinyl acetate.

The amount of polymer in the feed of the present invention is from 0.5 to 10 weight percent, and preferably from 2 to 6 weight percent.

The composition is in the form of small pellets which can be cradled by the shrimp until consumed, providing a high feed efficiency for the feed composition. These pellets are conveniently obtained by the extrusion processes described above, accompanied by cutting the extrudate to the desired pellet length. Use of the term "pellet" is intended to denote a compacted shape of the feed composition but is not intended to limit such shape to any particular geometry.

The size of the pellet is small enough to enable the shrimp to grip the pellet. The exact size of the pellet will depend on the size of growth stage of the shrimp. Small or young shrimp may require smaller pellet sizes than larger or older shrimp.

In contrast to fish and crustacea bait compositions which are of large size typically exceeding 100 g in bait weight, the shrimp feed pellets of the present invention will usually weigh no more than 1 g/pellet, and usually from 0.01 to 0.5 g/pellet.

Even though the pellet contains water - insoluble polymer binder, the pellet nevertheless has a limited life, in terms of physical integrity, in the water habitat of the shrimp. Usually, the pellet will disintegrate within 24 hours after addition to the water habitat, the exact disintegration time of course depending on such extrinsic factors as water turbulence and water temperature. Apparently, the high nutrient content of the pellet, together with its small size, usually less than 10 mm in at least one dimension enables this disintegration to occur. Of course, to the extent that the shrimp can find the pellets when added to the water habitat, then the shrimp rather than the water will consume the feed composition.

An optional component in the feed composition is a lubricant, to assist the compaction of the feed composition in the processing step. The amount of lubricant, if any, will depend on the particular processing used, e.g. pellet mill or extruder. Examples of lubricants include edible oils and fish solid solubles. The edible oils are considered to be any oils which are not harmful to the shrimp consuming the feed, and preferably are oils which can be digested. Examples of these preferred oil include fish oil, vegetable oil (such as corn ool, peanut oil, cotton seed oil). Fish solid solubles is a by-product from the preparation of fish meal and will generally consist of 20 to 50% of fish solids in water. It is normally largely removed during the preparation of fish meal. Although fish solid solubles will contribute some nutritional value to the feed composition, it will be selected in accordance with the present invention, more for its lubrication contribution than nutrition contribution to the composition. Fish meal as the nutrient will normally still contain a certain amount of fish oil and fish solid solubles. Supplemental amounts of lubricant may be required to be added to this or other nutrient components of the feed composition, in order to aid in the processing of the composition into pellet form, when the nutrient is too "dry." It is well within the skill of the art to determine when additional lubricant is needed.

The amount of added lubricant may be between 0 and 20 weight percent, preferably between 0 and 10 weight percent, and more preferably from 1 to 5 weight percent.

Another optional component is vitamin and mineral for the shrimp. These additives are typically available as a concentrate mixture or a separate concentrates which may be added to the feed composition. The vitamins may be either synthetic or derived from natural sources. A variety of vitamins and/or minerals may be added to the composition, the specific vitamins and mineral being determined by the particular nutritional characteristics of the other feed components and by the nutritional requirements of the shrimp species consuming the feed. Thus in some cases some selected vitamins may be added, in other case certain selected minerals may be added, in some cases a full spectrum vitamin and mineral supplement may be desirable, while in other cases no supplement at all may be necessary. The concentrate may, of course, contain inert non-vitamin material, as is common with commercial vitamin and mineral concentrates.

Since vitamin and/or mineral present in the feed composition increases the rate of growth of the shrimp, an effective amount, preferably from 0.5 to 5 weight percent each of mineral and vitamin, is present in the feed composition. These additives tend to remain in the pellet for consumption by the shrimp rather than be leached out of the pellet by the surrounding water.

Another optional component is up to about 10 weight percent of a preservative in the feed composition. Examples of preservatives would include mold inhibitors, antioxidants, and other additives known to those skilled in the art. Preferably, an effective amount of preservative is present in the feed composition which will generally be from 0.01 to 2 weight percent of preservative present in the feed composition.

With respect to the weight percents of the various components described hereinbefore, it is intended that all the weight percents will add up to 100 weight percent for each feed composition.

Other additives can be present in the feed composition as the need may arise.

The composition of the present invention is suitable for feeding all species of shrimp, including monodons and vannamei, and small shrimp and large shrimp, including the shrimp that are commonly referred to as prawns. Shrimp can generally be described as being small marine decapod crustaceans with slender elongated body, compressed abdomen, long legs, and long, spiny rostrum.

The following examples serve to illustrate the present invention. All parts, percentages, and proportions are by weight unless otherwise indicated.

EXAMPLES

Compositions of polymer, nutrient medium, and lubricant were dry blended by tumbling for about 15 minutes. This blend was fed to a 63.5 mm diameter extruder in which the breaker plate and screen pack were removed. A rapid compression screw was used, with a 20.6:1 length:diameter ratio, 1041 mm in length with a 267 mm mixing torpedo on the end. Melt temperature was maintained aroung 90 ± 10°C.

The blend was extruded through a heated 3.18 mm die to produce a continues rope which was cut into 10 mm long pellets, each weighing about 0.1 g and having a diameter of about 3.2 mm.

The shrimp feed was supplied by People's Moss Gin Co., of Palmetto, La.

Example 1

Compositions containing 3% and 5% E/VA (33% VA, melt index 43), about 3% of vegetable oil lubricant, and the remainder being shrimp feed, were prepared. Water absorption and integrity of the compositions were tested. The same properties were also tested for a control sample consisting of the same ingredients as were blended with the E/VA, but employing only a milo-based binder and masonex, a wood-based binder.

Both compositions were soaked underwater to determine durability. After 24 hours, the 5% E/VA sample remained essentially whole. The 3% E/VA composition swelled to about twice its original diameter, but remained in recognizable pellet form. The control sample lost all integrity in under 1 hour.

Water absorption was tested by soaking pellets in distilled water for 4 hours and determining water absorbed as a fraction of pellet dry weight. The 5% EVA pellets absorbed 82 weight percent water, and the 3% pellets absorbed 112 weight percent water. The collected fragments of the badly deteriorated control had absorbed 584 weight percent water.

EXAMPLES 2-4

The following experiments were run to determine the effect of copolymer level on processability and product integrity under water. In each of the following examples the copolymer was a copolymer of ethylene with 40% vinyl acetate, and the nutrient medium consisted of the following composition:

4

| soybean meal | 50% |
|---|---|
| fish meal | 19% |
| corn meal | 20% |
| rice bran | 10% |
| vitamin and mineral concentrate | 1% |

| Example | Nutrient % | Copolymer % | Fish Solid Solubles, % |
|---|---|---|---|
| 2 | 83 | 5 | 12 |
| 3 | 83 | 2 | 15 |
| 4 | 83 | 0.8 | 16.2 |

These composition were extruded through a 3.18 mm die at 5 - 10 rpm, using a pressure of $131,005 \cdot 10^5$ Pa - $96,53 \cdot 10^5$ Pa (1900 - 1400 psi) (13-16.5 MPa). Extruder temperature was attempted to be maintained at 90-100°C. The actual temperatures are shown below:

| Example | Temperature (°C) |
|---|---|
| 2 | 91 |
| 3 | 104 |
| 4 | 92 |

The compositions of Examples 2 and 3 were readily extruded. The composition of Example 4 was extrudable but would have benefited from a greater amount or more effective lubricant.

Pellets about 10 mm long prepared from the extrudate of these compositions were subjected to an accelerated test for disintegration in water by stirring in water for 1 hour. The remaining solids were collected on a 20 mesh (0.08 mm) screen and dried. The dry weight remaining is expressed below as a percent of the original dry weight. Even under the rigorous conditions of this test, the feed compositions show significant stability.

| Example | Recovered |
|---|---|
| 2 | 75.5 |
| 3 | 62.3 |
| 4 | 56 |

Pellets of feed composition of the present invention can be added to the water habitat of the shrimp by conventional means. Typically, the shrimp farmer uses a boat to traverse the pond containing the shrimp and during the traverse, broadcasts the pellets over the surface of the pond, by hand or by mechanical means, as uniformly as possible. Shrimp are generally night feeders and slow feeding as compared to the ravenous appetite of fish. Because the pellets have sufficient integrity in water, they can be added to the water during the day time, preferably late afternoon, for the shrimp to find and consume the pellets during their feeding time. Tests have shown that shrimp thrive on pellets of the feed compositions of the present invention.

## Claims

1. A method for feeding shrimp, comprising adding to the water habitat of the shrimp, pellets having a size suitable for gripping by the shrimp, said pellets having the composition comprising (a) from 75 to 95 weight percent of nutrient, (b) from 0.5 to 10 weight percent of water insoluble polymer having a melting point below 110°C, and (c) optionally an effective amount of lubricant, vitamin, mineral, and preservative.

2. The method of Claim 1 wherein said pellets weight no more than 1 g each.

3. The feed composition used for feeding shrimp as recited in Claim 1 or Claim 2.

4. The feed composition of Claim 3 wherein said polymer is ethylene/vinyl acetate copolymer.

5. The feed composition of Claim 3 or Claim 4 wherein said lubricant is present in from 0 to 20 weight percent.

6. The feed composition of Claim 3, 4 or 5 wherein said vitamin and mineral is present each in an amount of from 0 to 10 weight percent.

7. The feed composition of any one of Claims 3 to 6 in the form of pellets.

8. The feed composition of Claim 7 wherein said pellets each weigh no more than 1 g.

9. The feed composition of any one of Claims 3 to 8 wherein the polymer coats particles of said nutrient to bind the composition together.

10. The feed composition of any one of Claims 3 to 9 wherein from 85 to 93 weight percent of said nutrient and from 2 to 6 weight percent of said polymer are present.

11. The feed composition of any one of Claims 3 to 10 wherein from 1 to 5 weight percent of said lubricant is present.

12. The feed composition of any one of Claims 3 to 11 wherein from 1 to 5 weight percent each of vitamin and mineral for said shrimp is present.

13. A process for making shrimp feed having sufficient water stability to retain its integrity so as to be available for consumption by the shrimp rather than disintegrate in water prior to such consumption, comprising mixing together (a) from 75 to 95 weight percent of nutrient for said shrimp with (b) from 0.5 to 10 weight percent of water insoluble polymer having a melting point below 110°C., compacting the resultant composition under heat to flow and bond the particles of nutrient together, and forming pellets of the compacted composition.

14. The process of Claim 13 wherein each said pellets weight no more than 1 g.

15. The process of Claim 13 or Claim 14 wherein an effective amount of lubricant, vitamin and mineral for said shrimp and preservative for said composition is incorporated into the composition.

**Revendications**

1. Un procédé pour alimenter des crevettes, consistant à ajouter à l'habitat aqueux de la crevette des granulés ayant une taille convenant pour leur préhension par les crevettes, lesdits granulés ayant une composition comprenant (a) 75 à 95 pour cent en poids de substance nutritive, (b) 0,5 à 10 pour cent en poids d'un polymère insoluble dans l'eau ayant un point de fusion inférieur à 110°C, et (c) facultativement, une quantité efficace de lubrifiant, vitamine, substance minérale et conservateur.

2. Le procédé de la revendication 1, dans lequel lesdits granulés ne pèsent pas plus de 1 g chacun.

3. La composition alimentaire utilisée pour alimenter les crevettes telle que définie dans la revendication 1 ou la revendication 2.

4. La composition alimentaire de la revendication 3, dans laquelle ledit polymère est un copolymère éthylène/acétate de vinyle.

6

5. La composition alimentaire de la revendication 3 ou de la revendication 4, dans laquelle ledit lubrifiant est présent en une quantité de 0 à 20 pour cent en poids.

6. La composition alimentaire de la revendication 3, 4 ou 5, dans laquelle lesdites vitamine et substance minérale sont présentes chacune en une quantité de 0 à 10 pour cent en poids.

7. La composition alimentaire de l'une quelconque des revendications 3 à 6 sous la forme de granulés.

8. La composition alimentaire de la revendication 7, dans laquelle lesdits granulés ne pèsent pas plus de 1 g chacun.

9. La composition alimentaire de l'une quelconque des revendications 3 à 8, dans laquelle le polymère enrobe les particules de ladite substance nutritive pour lier la composition.

10. La composition alimentaire de l'une quelconque des revendications 3 à 9, dans laquelle il y a 85 à 93 pour cent en poids de ladite substance nutritive et 2 à 6 pour cent en poids dudit polymère.

11. La composition alimentaire de l'une quelconque des revendications 3 à 10, dans laquelle il y a 1 à 5 pour cent en poids dudit lubrifiant.

12. La composition alimentaire de l'une quelconque des revendications 3 à 11, dans laquelle il y a 1 à 5 pour cent en poids de chacune de la vitamine et de la substance minérale pour lesdites crevettes.

13. Un procédé pour fabriquer un aliment pour crevettes ayant une stabilité suffisante dans l'eau pour conserver son intégrité de manière à être disponible pour la consommation par les crevettes au lieu de se désagréger dans l'eau avant cette consommation, consistant à mélanger ensemble (a) 75 à 95 pour cent en poids de substance nutritive pour lesdites crevettes avec (b) 0,5 à 10 pour cent en poids d'un polymère insoluble dans l'eau ayant un point de fusion inférieur à 110°C, compacter la composition résultante sous application de chaleur pour faire s'écouler et lier ensemble les particules de substance nutritive, et former des granulés de la composition compactée.

14. Le procédé de la revendication 13, dans lequel chacun des granulés ne pèse pas plus de 1 g.

15. Le procédé de la revendication 13 ou 14, dans lequel on incorpore à la composition une quantité efficace de lubrifiant, de vitamine et de substance minérale pour lesdites crevettes et d'un conservateur pour ladite composition.

## Patentansprüche

1. Eine Methode zur Fütterung von Garnelen, umfaßend die Zugabe von Pellets mit einer geeigneten Größe, um durch die Garnele ergriffen zu werden, zu der Wasserheimat der Garnele, wobei die Pellets die Zusammensetzung enthalten, die (a) von 75 bis 95 Gew.-% Nährstoff, (b) von 0,5 bis 10 Gew.-% wasserunlösliches Polymer mit einem Schmelzpunkt unter 110°C und (c) gegebenenfalls eine wirksame Menge eines Gleitmittels, eines Vitamins, eines Minerals und eines Konservierungsmittels umfaßt.

2. Die Methode nach Anspruch 1, worin die Pellets nicht mehr als jedes 1 g wiegen.

3. Die Futterzusammensetzung, die zur Fütterung von Garnelen verwendet wird, wie im Anspruch 1 oder Anspruch 2 angegeben.

4. Die Futterzusammensetzung nach Anspruch 3, worin das Polymer ein Ethylen/Vinylacetatcopolymer ist.

5. Die Futterzusammensetzung nach Anspruch 3 oder Anspruch 4, worin das Gleitmittel von 0 bis 20 Gew.-% anwesend ist.

6. Die Futterzusammensetzung nach Anspruch 3, 4 oder 5, worin das Vitamin und das Mineral jedes in einer Menge von 0 bis 10 Gew.-% anwesend ist.

# EP 0 282 170 B1

**7.** Die Futterzusammensetzung nach einem der Ansprüche 3 bis 6 in der Form von Pellets.

**8.** Die Futterzusammensetzung nach Anspruch 7, worin die Pellets jedes nicht mehr als 1 g wiegen.

**9.** Die Futterzusammensetzung nach einem der Ansprüche 3 bis 8, worin das Polymer Partikel des Nährstoffs beschichtet, um die Zusammensetzung zusammenzubinden.

**10.** Die Futterzusammensetzung nach einem der Ansprüche 3 bis 9, worin von 85 bis 93 Gew.-% des Nährstoffes und von 2 bis 6 Gew.-% des Polymers anwesend sind.

**11.** Die Futterzusammensetzung nach einem der Ansprüche 3 bis 10, worin von 1 bis 5 Gew.-% des Gleitmittels anwesend sind.

**12.** Die Futterzusammensetzung nach einem der Ansprüche 3 bis 11, worin jeweils von 1 bis 5 Gew.-% des Vitamins und des Minerals für die Garnele anwesend sind.

**13.** Ein Verfahren zur Herstellung von Garnelenfutter mit ausreichender Wasserstabilität, um seine Unversehrtheit zu erhalten, so daß es zum Verzehr durch die Garnele verfügbar ist und nicht in Wasser vor diesem Verzehr sich zersetzt, umfaßend Vermischen von (a) von 75 bis 95 Gew.-% Nährstoff für die Garnele mit (b) von 0,5 bis 10 Gew.-% wasserunlöslichem Polymer mit einem Schmelzpunkt unter 110°C, Zusammendrücken der resultierenden Zusammensetzung unter Hitze, um die Partikel des Nährstoffes fliessen und sich zusammenbinden zu lassen und Bildung von Pellets aus der zusammengedrückten Zusammensetzung.

**14.** Das Verfahren nach Anspruch 13, worin jedes der Pellets nicht mehr als 1 g wiegt.

**15.** Das Verfahren nach Anspruch 13 oder 14, worin eine wirksame Menge eines Gleitmittels, eines Vitamins und eines Minerals für die Garnele und eines Konservierungsmittels für die Zusammensetzung in die Zusammensetzung eingearbeitet wird.

8